# FASCICULE DE BREVET EUROPEEN

(11) **EP 2 435 647 B1**
(45) Date de publication et mention de la délivrance du brevet: **14.08.2013**
(21) Numéro de dépôt: 10724008.7
(22) Date de dépôt: 25.05.2010
(51) Int. Cl.: E04H 6/02, F24J 2/04, H01L 31/042, F24J 2/54, F24J 2/52

(54) **ABRI DE PARKING ÉQUIPE DE PANNEAUX SOLAIRES PHOTOVOLTAÏQUES**
CARPORT VORGESEHEN MIT PHOTOVOLTAISCHEN SOLARPANEELE
PARKING SHELTER PROVIDED WITH PHOTOVOLTAIC SOLAR PANELS

(30) Priorité: 26.05.2009 FR 0953466
(43) Date de publication de la demande: 04.04.2012
(73) Titulaire: Batut, Bernard, 82000 Montauban (FR); Art'ur Sarl, 75016 Paris (FR); Enerqos France, 75008 Paris (FR)
(72) Inventeur: PASCAL, Philippe, F-75016 Paris (FR); VOGELEISEN, Marc, F-75008 Paris (FR); GASHTI, Shahin, F-75008 Paris (FR)
(74) Mandataire: Camus, Olivier Jean-Claude
(86) Numéro de dépôt international: PCT/EP2010/057185
(87) Numéro de publication internationale: WO 2010/136468

(56) Documents cités:
- EP-A- 1 626 140
- EP-A- 1 933 389
- WO-A-97/25496
- FR-A- 2 169 482

## Description

La présente invention concerne un abri de parking équipé de panneaux solaires photovoltaïques. Elle a essentiellement pour but d'équiper des parkings d'abris permettant de récupérer, et avantageusement d'exploiter, de l'énergie solaire, en proposant une solution modulable, facile d'installation, et économique en terme de coût de fabrication.

Le domaine de l'invention est, d'une façon générale, celui de la récupération et de l'utilisation de l'énergie solaire, et plus particulièrement, celui des abris de parking équipés de panneaux solaires photovoltaïques. Dans la tendance actuelle de diversification des sources d'énergie disponibles, l'exploitation de l'énergie solaire est une alternative intéressante qui est en pleine voie de développement. De nombreuses politiques incitatives encouragent les entreprises et les particuliers à équiper leurs bâtiments de panneaux solaires photovoltaïques.

Les parkings en plein air sont des endroits particulièrement intéressants pour installer des panneaux solaires photovoltaïques. En effet, les avantages de telles installations sont multiples, essentiellement dans les régions à fort ensoleillement : tout d'abord, proposer des abris pour véhicules dans les parkings en plein air apporte un confort aux usagers, qui exposent moins leurs véhicules à la chaleur et aux intempéries; ensuite, installer des panneaux solaires photovoltaïques sur des toits d'abris de parking n'est pas particulièrement complexe, ces toits n'étant pas situés très hauts, et ne présentant pas certaines contraintes, notamment d'ordre esthétiques, rencontrées pour les bâtiments d'habitation. Enfin, avantageusement, l'énergie solaire récupérée, et transformée en énergie électrique peut être directement exploitable par les utilisateurs de ces parkings, qui peuvent par exemple recharger électriquement leur voiture si celle-ci est de type électrique.

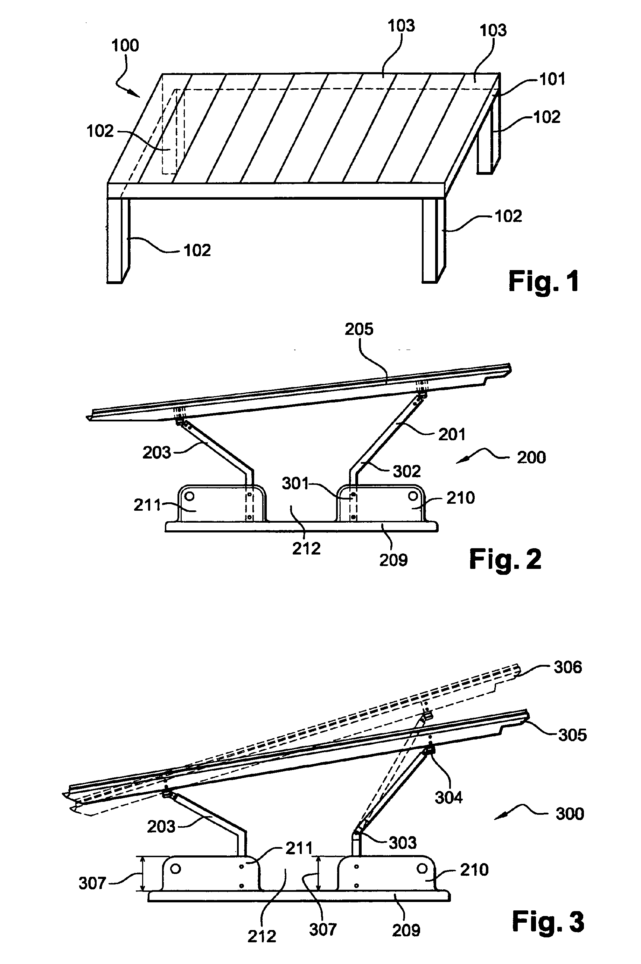

On a ainsi vu se développer récemment de tels abris pour parkings, dont un exemple est schématiquement représenté à la figure 1. Dans cet exemple, un abri 100 est essentiellement constitué d'un toit 101 de forme globalement rectangulaire supporté par quatre pieds 102 ; le toit 101 est recouvert par une pluralité de panneaux solaires photovoltaïques 103, qui sont assemblés mécaniquement et reliés électriquement les uns aux autres selon des principes connus. Dans les exemples connus, les pieds 102 doivent être positionnés dans des fondations, non représentées sur la figure, préalablement ménagées dans le sol afin de garantir le maintien de l'abri 100, notamment en cas de présence de vent. Pour limiter la prise au vent, on a privilégié par ailleurs des toits 101 disposés sensiblement horizontalement. La prise en compte de la prise au vent est en effet un facteur primordial dans la conception des abris de parkings, ces derniers étant le plus souvent situés sur de vastes étendues planes, particulièrement exposées au vent. Le document EP-A-1626140 divulgue un abri de parking qui comprend les caractéristiques du préambule de la revendication 1.

De telles conceptions d'abris de parking posent un certain nombre d'inconvénients qui rendent leur installation et leur exploitation insatisfaisantes.

Ainsi, d'une part, le caractère horizontal des toits n'assure pas un rendement optimal de l'énergie solaire récupérée par les panneaux solaires photovoltaïques. En effet, de tels panneaux solaires récupèrent un maximum d'énergie lorsqu'ils sont sensiblement inclinés dans une direction préalablement connue, dépendant de la position géographique des abris considérés. D'autre part, le fait de devoir installer des fondations dans le sol pour assurer une résistance au vent satisfaisante rend le déploiement de tels abris contraignant et coûteux.

Dans ce contexte, l'invention vise à proposer un abri de parking permettant de s'affranchir des problèmes précités, ledit abri de parking présentant avantageusement un toit incliné, un socle de maintien qui permet de s'affranchir de la présence de fondation, et, dans tous les cas, une structure de maintien particulière améliorant la résistance au vent, primordiale dans les abris pour parkings en plein air.

L'objet de l'invention porte ainsi essentiellement sur un abri de parking comportant notamment un toit recouvert au moins partiellement de panneaux solaires photovoltaïques caractérisé en ce que ledit abri de parking comporte quatre pied de maintien, avec au moins un premier pied de maintien et un deuxième pied de maintien présentant une partie basse sensiblement verticale, et une partie haute inclinée orientée vers la périphérie du toit.

Outre les caractéristiques principales qui viennent d'être mentionnées dans le paragraphe précédent, l'abri de parking selon l'invention peut présenter une ou plusieurs caractéristiques supplémentaires ci-dessous, considérées individuellement ou selon toutes les combinaisons techniquement possibles :
- le toit présente une inclinaison, notamment une inclinaison comprise entre 10 et 20 degrés par rapport à l'horizontale ;
- le troisième pied et le quatrième pied présentent chacun une partie basse sensiblement verticale et une partie haute inclinée orientée vers la périphérie du toit ;
- l'abri de parking selon l'invention comporte un premier socle et un deuxième socle, chaque socle assurant la fixation de deux des quatre pieds ; le socle est un socle lestant, c'est-à-dire qu'il assure la fixation des pieds, en ayant notamment un poids suffisant, sans nécessiter la réalisation préalable de fondations pour maintenir ledit socle au sol ;
- au moins un des deux socles comporte une première borne et une deuxième borne espacées d'un espace central, chaque borne recevant et maintenant la partie sensiblement verticale d'un des pieds de l'abri ;
- au moins un des socles comporte une batterie apte à stocker l'énergie solaire récupérée par les panneaux solaires photovoltaïques, et des moyens de restitution de l'énergie électrique stockée ;
- le premier pied de maintien et le deuxième pied de maintien sont articulés, par une articulation disposée au niveau d'une jonction entre la partie basse et la partie haute du premier pied de maintien et du deuxième pied de maintien ;
- l'abri de parking comporte au moins une barre de renfort disposée sous le toit, et reliant les extrémités supérieures de deux des pieds de maintien, notamment les extrémités de pieds de maintien non fixés sur un même socle ;
- la jonction entre la barre de renfort et les extrémités supérieures des pieds de maintien est assurée par une rotule ;
- au moins un des pieds de maintien est creux pour laisser passer un câble électrique.

D'autres caractéristiques et avantages de l'invention ressortiront clairement de la description qui en est donnée ci-dessous, à titre indicatif et nullement limitatif, de modes de réalisations faisant références aux figures annexées ci-jointes sur lesquelles :
- la figure 1, déjà décrite, représente un exemple d'abri de parking de l'état de la technique équipé de panneaux solaires photovoltaïques;
- la figure 2 représente une vue de côté d'un premier exemple de réalisation de l'abri de parking selon l'invention ;
- la figure 3 représente une vue de côté d'un deuxième exemple de réalisation de l'abri de parking selon l'invention ;
- la figure 4 représente un détail du premier exemple d'abri de parking selon l'invention ;
- la figure 5 montre une vue en perspective du premier exemple de réalisation de l'abri de parking selon l'invention.

Pour des raisons de clarté, les éléments apparaissant sur différentes figures ont été désignés par des références similaires. De même, seuls les éléments utiles pour la compréhension de l'invention ont été représentés.

Sur la figure 2, on a représenté, en vue schématique de côté, un premier exemple de réalisation d'un abri 200 de parking selon l'invention.

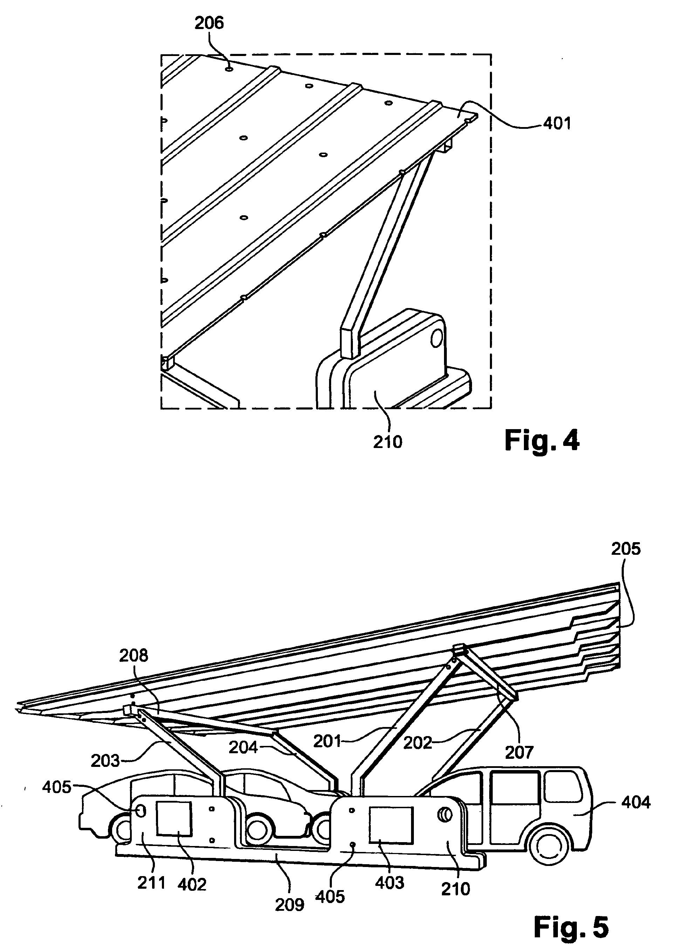

L'abri 200 est essentiellement constitué, dans cet exemple :
- d'un toit 205, fabriqué par exemple en panneaux de bois juxtaposés, de forme sensiblement rectangulaire, dont la partie supérieure est recouverte de panneaux solaires photovoltaïques 206, visibles à la figure 3, qui sont juxtaposés et reliés entre eux de manière connue pour permettre la récupération de l'énergie solaire et la transformation de ladite énergie solaire en énergie électrique ;
- d'une structure permettant le maintien dudit toit 205, ladite structure étant ici constituée :
   - d'un ensemble de quatre pieds de maintien, tous visibles sur la figure 5, avec un premier pied 201, un deuxième pied 202, un troisième pied 203 et un quatrième pied 204 ; avantageusement, les pieds de maintien sont réalisés en acier galvanisé pour assurer la rigidité de la structure de maintien. Ils peuvent être dans certains exemples de réalisation creux pour permettre le passage de câbles électriques destinés à transporter l'énergie électrique née de la transformation de l'énergie solaire par les panneaux solaires photovoltaïques vers le sol ;

   - d'une première barre de renfort 207 et d'une deuxième barre de renfort 208, reliant respectivement les extrémités supérieures du premier pied de maintien 201 et du deuxième pied de maintien 202, et les extrémités supérieures du troisième pied de maintien 203 et du quatrième pied de maintien 204. Les barres de renfort 207 et 208 sont disposées sous le toit 205 ; ce dernier peut reposer sur les barres de renfort 207 et 208. Les barres de renfort 207 et 208 sont également utilisées pour éviter tout écartement latéral des pieds de maintien qu'elles relient.
   - d'un premier socle 209 et d'un deuxième socle non visible sur les figures. Les socles sont avantageusement réalisés dans des matériaux lourds, typiquement en béton. Leur présence permet ainsi de s'affranchir de la réalisation préalable de fondations, ce qui rend l'installation des abris de parking selon l'invention particulièrement simple. Dans le premier exemple représenté aux figures 1, 3, 4 et 5, mais également dans l'exemple représenté à la figure 2 qui sera décrit plus bas, les deux socles comportent chacun une première borne 210 et une deuxième borne 211. La première borne 210 et la deuxième borne 211 sont séparées par un espace central 212 de longueur suffisante pour laisser passer un utilisateur entre la première borne et la deuxième borne.

Dans l'invention, afin d'améliorer la résistance au vent de l'abri 200 de parking, on prévoit une forme particulière du premier pied de maintien 201 et du deuxième pied de maintien 202, qui sont les pieds de plus grande taille lorsque le toit 205 est dans une position inclinée, comme c'est le cas dans les exemples représentés. La forme particulière consiste en un pied dont une partie inférieure 301 est sensiblement verticale, et dont une partie supérieure 302, présente dans le prolongement de la partie inférieure 301, est inclinée. L'inclinaison de la partie supérieure par rapport à l'horizontal est typiquement comprise entre 50 degrés et 120 degrés. L'inclinaison est orientée vers la périphérie du toit 205 : ceci signifie que la partie supérieure 302, qui prend naissance au niveau de l'extrémité supérieure de la partie inférieure 301, elle-même disposée dans une position sensiblement centrale du socle qui la maintient, s'étend obliquement vers une extrémité du toit 205. Dans les exemples représentés, la partie supérieure 302 s'étend selon un plan vertical et parallèle à la longueur du rectangle définissant la forme du toit 205.

Dans certains modes de réalisation, seuls les premier et deuxième pieds de maintien présentent une forme non linéaire, les deux autre pieds pouvant être de simples pieds verticaux. Cependant, dans les modes de réalisation avantageux, afin d'augmenter encore la résistance à la prise au vent, les troisième et quatrième pieds de maintien présentent également une forme globale non verticale, identique à celle des premier et troisième pieds de maintien.

Dans le premier exemple de réalisation, les pieds de maintien ne sont pas articulés.

La figure 3 illustre un deuxième exemple 300 de réalisation d'abri de parking selon l'invention dans lequel le premier pied de maintien 201 et le deuxième pied de maintien 202 sont articulés. Les articulations de ces pieds de maintien sont avantageusement prévues en deux endroits des pieds considérés, mais dans d'autres exemples de réalisation, on peut se contenter d'une unique articulation. Ainsi, on proposer dans l'exemple représenté, de disposer, sur chacun des pieds considérées :
- une première rotule 303 au niveau de la jonction entre la partie inférieure et la partie supérieure ;
- une deuxième rotule 304 au niveau de l'extrémité supérieure de la partie supérieure, à l'endroit où la barre de renfort rejoint ladite partie supérieure.

Avec un tel système d'articulation, l'inclinaison du toit 205 peut être contrôlée, afin de s'adapter à la hauteur du soleil en été comme en hiver, pour évoluer entre une première position 305 et une deuxième position 306. Le système d'articulation décrit peut avantageusement être complété par la possibilité de régler la hauteur des pieds de maintien, en faisant évoluer leur partie inférieure en translation verticale 307 dans les bornes des socles. La hauteur du toit 205 est ainsi également ajustable ; il peut par exemple être relativement haut dans les endroits peu exposés au vent, et plus bas dans les zones venteuses.
Dans un mode de réalisation avantageux, on prévoit de disposer dans les bornes des socles au moins un élément stockeur d'énergie de type batterie 402 permettant le stockage du courant continu. Les bornes peuvent avantageusement aussi renfermer un onduleur 403 assurant la conversion du courant continu en courant alternatif ; le courant produit par les panneaux solaires photovoltaïques peut ainsi soit être injecté et converti sur le réseau électrique national, soit dirigé vers une borne de distribution placée à proximité immédiate de l'abri de parking considéré, ladite borne de distribution pouvant avantageusement directement intégrer des moyens de paiement. Ainsi, un véhicule électrique 404 garé sous l'abri de parking selon l'invention peut, pendant son temps de stationnement, recharger ses batteries avec une électricité directement produite par l'abri considéré.

Avantageusement, les abris de parking selon l'invention sont modulaires : il est possible de les juxtaposer facilement, la liaison entre les différents blocs modulaires - chaque bloc modulaire étant constitué par un abri de parking du type de ceux décrits précédemment - étant réalisé au niveau des toits, et/ou des socles. A cet effet, on prévoit par exemple, au niveau des socles, d'assembler les socles par des moyens de fixation disposés dans des trous 405 préalablement ménagés dans les différentes bornes des socles. Au niveau des toits, on prévoit par exemple qu'un extrémité 401 du toit ne soit pas recouverte, sur toute sa longueur, par un panneau solaire photovoltaïque ; la partie non recouverte 401 est ainsi destinée à être recouverte par une portion de panneau solaire photovoltaïque du bloc modulaire voisin, chaque bloc modulaire prévoyant par ailleurs des moyens de connexion électriques appropriés pour que les panneaux solaires photovoltaïques de deux blocs modulaires voisins puissent être électriquement reliés.

## Revendications

1. Abri de parking (200) comportant un toit (205) recouvert au moins partiellement de panneaux solaires photovoltaïques (206) ledit abri de parking comportant :
■ quatre pieds de maintien (201 ; 202 ; 203 ; 204), avec au moins un premier pied de maintien (201) et un deuxième pied de maintien (202) présentant une partie basse (301) sensiblement verticale, et une partie haute (302) inclinée orientée vers la périphérie dudit toit (205), ledit abri de parking étant **caractérisé en ce qu'**il comporte en outre un premier socle (209) et un deuxième socle, chaque socle assurant la fixation de deux des quatre pieds (201 ; 202 ; 203 ; 204), au moins un des deux socles comportant une première borne (210) et une deuxième borne (211) espacées d'un espace central (212), chaque borne (210 ; 211) recevant et maintenant la partie sensiblement verticale d'un des pieds de l'abri.

2. Abri de parking (200) selon la revendication précédente **caractérisé en ce que** le toit (205) présente une inclinaison, notamment une inclinaison comprise entre 10 et 20 degrés par rapport à l'horizontale.

3. Abri de parking (200) selon l'une quelconque des revendications précédentes **caractérisé en ce que** le troisième pied (203) et le quatrième pied (204) présentent chacun une partie basse sensiblement verticale et une partie haute inclinée orientée vers la périphérie du toit (205).

4. Abri de parking (200) selon l'une quelconque des revendications précédentes **caractérisé en ce que** au moins un des socles comporte une batterie (402) apte à stocker l'énergie solaire récupérée par les panneaux solaires photovoltaïques (206), et des moyens de restitution de l'énergie électrique stockée.

5. Abri de parking (200) selon l'une quelconque des revendications précédentes **caractérisé en ce que** le premier pied de maintien (201) et le deuxième pied de maintien (202) sont articulés, par une articulation (303) disposée au niveau d'une jonction entre la partie basse (301) et la partie haute (302) du premier pied de maintien (201) et du deuxième pied de maintien (202).

6. Abri de parking (200) selon l'une quelconque des revendications précédentes **caractérisé en ce qu'**il comporte au moins une barre de renfort (207 ; 208) disposée sous le toit (205), et reliant les extrémités supérieures de deux des pieds de maintien, notamment les extrémités de pieds de maintien non fixés sur un même socle.

7. Abri de parking (200) selon l'une quelconque des revendications précédentes **caractérisé en ce que** la jonction entre la barre de renfort et les extrémités supérieures des pieds de maintien est assurée par une rotule (304).

8. Abri de parking (200) selon l'une quelconque des revendications précédentes **caractérisé en ce que** au moins un des pieds de maintien (201 ; 202 ; 203 ; 204) est creux pour laisser passer un câble électrique.

## Patentansprüche

1. Parkunterstand (200), der ein Dach (205) umfasst, das zumindest zum Teil von Solarpanelen (206) bedeckt wird, wobei der Parkunterstand Folgendes umfasst:
■ vier Stützfüße (201; 202; 203; 204), wobei mindestens ein erster Stützfuß (201) und ein zweiter Stützfuß (202) einen im Wesentlichen vertikalen niedrigen Teil (301) und einen geneigten hohen Teil (302), der zum Rand des Dachs (205) ausgerichtet ist, aufweisen, wobei der Parkunterstand **dadurch gekennzeichnet ist, dass** er außerdem einen ersten Sockel (209) und einen zweiten Sockel umfasst, wobei jeder Sockel die Fixierung der zwei der vier Füße (201; 202; 203; 204) sicherstellt, wobei mindestens einer der zwei Sockel eine erste Begrenzung (210) und eine zweite Begrenzung (211) umfasst, die von einem zentralen Raum (212) beabstandet sind, wobei jede Begrenzung (210; 211) den im Wesentlichen vertikalen Teil eines der Füße des Unterstands aufnimmt und hält.

2. Parkunterstand (200) nach dem vorhergehenden Anspruch, **dadurch gekennzeichnet, dass** das Dach (205) eine Neigung, insbesondere eine Neigung, die zwischen 10 und 20 Grad in Bezug auf die Horizontale liegt, aufweist.

3. Parkunterstand (200) nach einem der vorhergehenden Ansprüche, **dadurch gekennzeichnet, dass** der dritte Fuß (203) und der vierte Fuß (204) jeweils einen im Wesentlichen vertikalen niedrigen Teil und einen geneigten hohen Teil, der zum Rand des Dachs (205) ausgerichtet ist, aufweisen.

4. Parkunterstand (200) nach einem der vorhergehenden Ansprüche, **dadurch gekennzeichnet, dass** mindestens einer der Sockel eine Batterie (402), die die Solarenergie speichern kann, die von den Solarpanelen (206) rückgewonnen werden kann, und Mittel zur Abgabe der gespeicherten Solarenergie umfasst.

5. Parkunterstand (200) nach einem der vorhergehenden Ansprüche, **dadurch gekennzeichnet, dass** der erste Stützfuß (201) und der zweite Stützfuß (202) durch ein Gelenk (303) angelenkt sind, das auf Höhe einer Verbindungsstelle zwischen dem niedrigen Teil (301) und dem hohen Teil (302) des ersten Stützfußes (201) und des zweiten Stützfußes (202) angeordnet ist.

6. Parkunterstand (200) nach einem der vorhergehenden Ansprüche, **dadurch gekennzeichnet, dass** er mindestens eine Verstärkungsstrebe (207; 208) umfasst, die unter dem Dach (205) angeordnet ist und die oberen Enden von zwei der Stützfüße, insbesondere die Enden der Stützfüße, die nicht auf ein und demselben Sockel fixiert sind, verbindet.

7. Parkunterstand (200) nach einem der vorhergehenden Ansprüche, **dadurch gekennzeichnet, dass** die Verbindungsstelle zwischen der Verstärkungsstrebe und den oberen Enden der Stützfüße durch ein Kugelgelenk (304) gesichert ist.

8. Parkunterstand (200) nach einem der vorhergehenden Ansprüche, **dadurch gekennzeichnet, dass** mindestens einer der Stützfüße (201; 202; 203; 204) hohl ist, um ein Stromkabel hindurch zu führen.

## Claims

1. A parking shelter (200) comprising a roof (205) at least partially covered by photovoltaic solar panels (206), said parking shelter comprising:
■ four supporting feet (201; 202; 203; 204), with at least a first supporting foot (201) and a second supporting foot (202) presenting a substantially vertical bottom part (301), and an inclined top part (302) directed towards the periphery of said roof (205), said parking shelter being **characterized in that** it further comprises a first base (209) and a second base, each base ensuring the fixation of two of the four feet (201; 202; 203; 204), at least one of the two bases comprising a first post (210) and a second post (211) spaced apart by a central space (212), each post (210; 211) receiving and maintaining the substantially vertical part of one of the feet of the shelter.

2. The parking shelter (200) according to the previous claim, **characterized in that** the roof (205) presents an inclination, particularly an inclination of between 10 and 20 degrees with relation to the horizontal.

3. The parking shelter (200) according to any one of the previous claims, **characterized in that** the third foot (203) and the fourth foot (204) each present a substantially vertical bottom part and an inclined top part directed towards the periphery of the roof (205).

4. The parking shelter (200) according to any one of the previous claims, **characterized in that** at least one of the bases comprises a battery (402) capable of storing the solar energy recovered by the photovoltaic solar panels (206), and means for restoring the stored electrical energy.

5. The parking shelter (200) according to any one of the previous claims, **characterized in that** the first supporting foot (201) and the second supporting foot (202) are articulated by an articulation (303) disposed at the level of a junction between the bottom part (301) and the top part (302) of the first supporting foot (201) and the second supporting foot (202).

6. The parking shelter (200) according to any one of the previous claims, **characterized in that** the shelter comprises at least one reinforcement bar (207; 208) disposed under the roof (205), and connecting the upper ends of two of the supporting feet, particularly the ends of the supporting feet not fixed on one and the same base.

7. The parking shelter (200) according to any one of the previous claims, **characterized in that** the junction between the reinforcement bar and the upper ends of the supporting feet is ensured by a swivel joint (304).

8. The parking shelter (200) according to any one of the previous claims, **characterized in that** at least one of the supporting feet (201; 202; 203; 204) is hollow to allow an electrical cable to pass through.
